# EUROPEAN PATENT SPECIFICATION

(11) **EP 0 516 120 B1**
(45) Date of publication and mention of the grant of the patent: **10.08.1994**
(21) Application number: 92109050.2
(22) Date of filing: 29.05.1992
(51) Int. Cl.: B62D 55/26

(54) **Shoe of crawler belt or chain**
Bodenplatte eines Raupenbands oder einer Raupenkette
Patin d'une bande ou chaîne à chenille

(30) Priority: 29.05.1991 JP 39399/91
(43) Date of publication of application: 02.12.1992
(73) Proprietor: THE YOKOHAMA RUBBER CO., LTD., Tokyo, 105 (JP)
(72) Inventor: Hara, Yoshiaki, Hadano-shi, Kanagawa (JP)
(74) Representative: Füchsle, Klaus, Dipl.-Ing.

(56) References cited:
- US-A- 2 917 348
- US-A- 4 470 641

## Description

### BACKGROUND OF THE INVENTION

### 1. Field of the Invention

This invention relates to a shoe of a crawler belt or chain, hereinafter referred to as "crawler shoe" used in an endless tracked vehicle, such as a construction or agricultural machine or the like.

### 2. Description of the Related Art

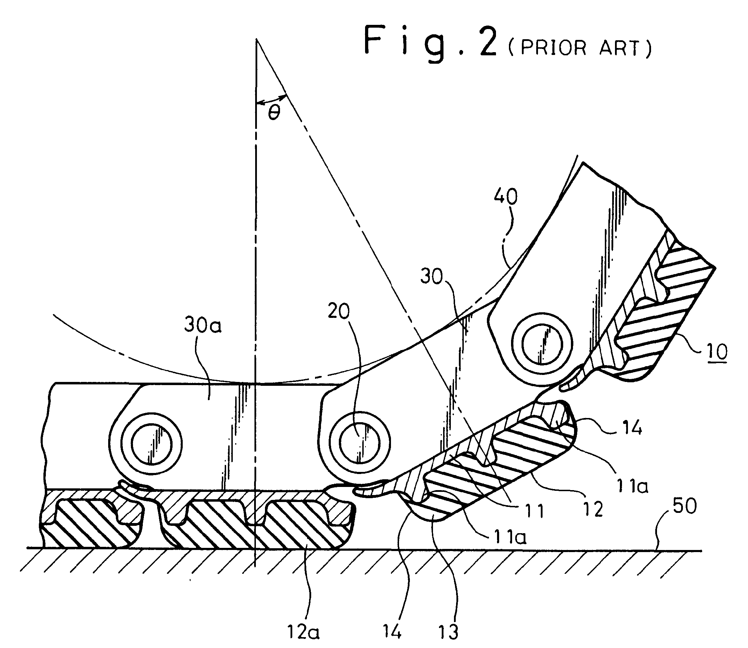

As shown in Fig. 2, in the prior art, such an endless tracked vehicle has crawler belts or chains, each of which comprising a plurality of crawler shoes 10. Each of the crawler shoes 10 comprises a metal shoes 11 made of, such as iron or the like, and a elastic shoe 12 made of, such as a rubber or the like, integrally sulfration molded and sealed with the metal shoe 11 at the ground contact side, so as to prevent the paved road from being damaged by such a crawler shoe 10. The elastic shoe 12 and the metal shoe 11 of the crawler shoe 10 are provided with blot inserting screw holes (not shown) penetrating therethrough for mounting one on the other. The crawler shoes 10 are connected to each other, in turn, by means of links 30 attached thereto by pins 20 with bolts and nuts to constitute an endless crawler belt or chain.

In such a conventionally known crawler shoe 10, the elastic shoe 12 is provided with convex portions on the surface of the respective ends in the traveling direction (i.e., the corner of intersection between the side surfaces 14 along the longitudinal direction and the ground contact surface 15).

Therefore, the difference between the rubber thickness of the elastic shoe 12 at the upper portions of the respective projections 11a and 11b and the rubber thickness of the elastic shoe 12 at the position between the adjacent projections 11a and 11b are considerably increased. Thus, when the elastic shoe 12 comes into contact with the road surface 50, a stress exerted on the rubber will be concentrated on the upper portions of the projections 11a and 11b.

In addition, when the crawler shoe 10 extended on the driving or idler sprocket 40 comes into contact with the road surface 50 at the "final link plunge angle ϑ " and one of the respective end portions 13 of the resilient shoe 12 in the traveling direction comes to be plunged between the road surface 50 and the projection 11a of the metal shoe 11, the rubber around this portion 13 will be subjected to an expansion strain or deformation due to the shearing force.

The "final link plunge angle ϑ " is defined as an angle of of the link when the preceeding link 30a comes to a position to be parallel to the road surface 50 and represented as follows. ϑ = 360 ° /n Here, n= number of links.

Therefore, during traveling on a gravel road, if pebbles or the like on the road are snapped by the side faces 14 of the resilient shoes 12, the rubber therearound will be damaged and sometimes a part of the rubber will be removed.

### SUMMARY OF THE INVENTION

An object of the present invention is to provide a crawler shoe in which a concentration of stress exerted on the elastic shoe at the upper portions of the projections can be moderated and the shearing rigidity of the respective end portions in the traveling direction can be increased.

Another object of the present invention is to provide a crawler shoe in which the drawbacks as mentioned above with reference to the prior art can be overcome.

According to the present invention, there is provided a crawler crawler shoe used in an endless tracked vehicle, said crawler shoehaving a ground contact side and comprising: a metal shoes made of, such as iron or the like, and providing integrally with at least two projections projecting toward said ground contact side, and a elastic shoe made of, such as a rubber or the like, integrally molded and sealed with said metal shoe at said ground contact side, characterized in that a reinforcedmember is integrally burried or disposed in said elastic shoe at a position between adjacent two of said projections.

In the crawler shoe according to the present invention, the difference in the thickness of the resilient shoe at the upper portions of the respective projections and at the position between the adjacent projections can be reduced and, therefore, when coming into contact with the road surface, a stress concentration will be moderated.

In addition, at the final link plunge angle, the shearing rigidity of the elastic shoe at the portion contacting with the road surface will be increased.

### BRIEF DESCRIPTION OF THE DRAWINGS

Figure 1 is a cross-sectional view of a part of a crawler belt having a plurality of crawler shoes, according to the present invention, illustrating one being contact with the road surface and another being at a plunged position.

Figure 2 is a coross-sectional view of a conventionally known crawler belt, illustrating one being contact with the road surface and another being at a plunged position.

### DESCRIPTION OF THE PREFERRED EMBODIMENTS

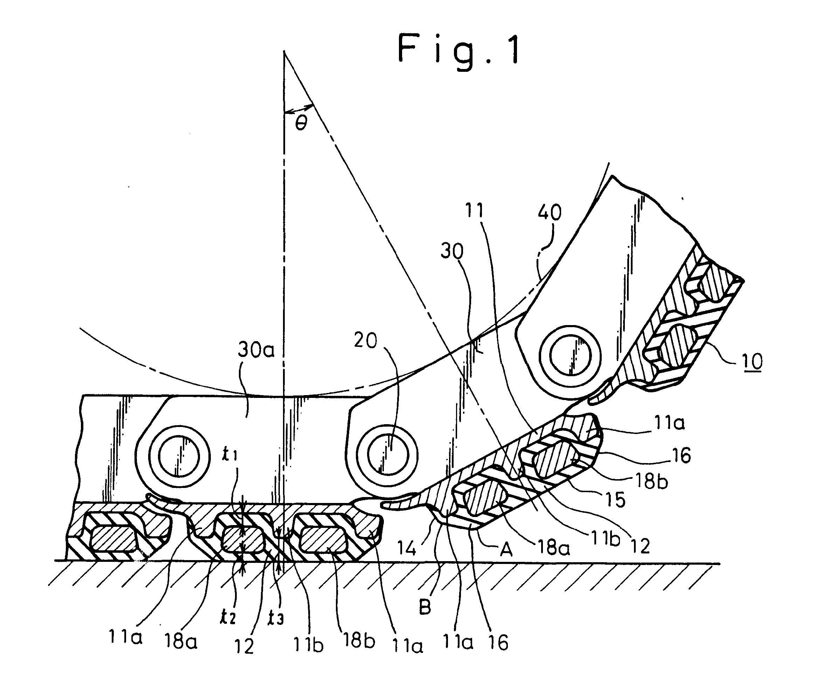

The present invention will now be described in detail with reference to the embodiment shown in Fig. 1.

In a crawler shoe shown in Fig. 1, the parts or elements corresponding to those shown in Fig. 2 are indicated by the same reference numerals.

The crawler shoe 10 has a metal shoe 11 which is provided, at the respective ends thereof in the traveling direction and a central position, with three projections 11a and 11b projecting integrally from the metal shoe 11 toward the ground contact surface and arranged in the longitudinal direction. Two reinforced members 18a and 18b are burried and sulfration-sealed in the resilient shoe 12 at positions between the adjacent two projections 11a and 11b. These reinforced members 18a and 18b are burried in such a manner that they are spaced in the longitudinal direction of the elastic shoe 12, except for the position around the mount bolt screw hole (not shown).

The rubber thicknesses t₁ and t₂ of the elastic shoe 12 at the positions where the respective reinforced members 18a and 18b are burried in the elastic member 12 between the respective projections 11a at the respective ends in the traveling direction and the projection 11b at the central position and the rubber thickness t₃ of the resilient shoe 12 at the position of the projection 11b at the central position in the traveling direction are defined as follows by advantageously selecting the thicknesses of the reinforced members 18a and 18b.
$\text{0.5 t₃ ≦ (t₁ + t₂ ) ≦ 2.0 t₃}$ , preferably
$\text{0.8 t₃ ≦ (t₁ + t₂ ) ≦ 1.3 t₃}$

If $\text{(t₁ + t₂ ) < 0.5 t₃}$ , the rubber thickness is so small that the effect of the resilient shoe cannot be attained enough. On the other hand, if $\text{(t₁ + t₂ ) > 2.0 t₃}$ , the thickness of the reinforced member is so small that a stress will be unfavorably concentrated on the rubber at the upper areas of the projections 11a and 11b.

The depth of the reinforced members 18a and 18b (i.e., the position of the resilient shoe 12 in the direction of thickness) is such that, assuming that the projections 11a and 11b and the reinforced materials 18a and 18b having their projected areas or surfaces in a circumferential direction of the crawler belt 10, at least a part of the projecting surfaces of the reinforced materials 18a and 18b be superimposed on the projecting surface of the projections 11a and 11b.

Contrary to this, if the depth of the reinforced materials 18a and 18b was so shallow, or if it was so deep, the shearing rigidity of the elastic shoe 12 becomes to be unfavorably reduced as comparing with that as mentioned above.

The material of the above-mentioned reinforced members 18a and 18b can be selected from a metal, such as an iron, a fiber reinforced plastic (FRP), a plastic or the like.

The elastic shoe 12 of the crawler belt 10 is provided with tapered surfaces 16 at positions of intersections between the vertical side faces 14 arranged at the respective ends in the traveling direction and the ground contact surface 15 which is horizontal with respect to the traveling direction, i.e., on the surfaces (the upper portions of the projections 11a) corresponding to the projected areas of the projection 11a in the vertical direction toward the ground contact surface, assuming that the projections 11a of the metal shoe 11 have projected areas or surfaces in the vertical direction.

The end portion A of the ground contact surface 15 of the elastic shoe 12 (i.e., the transitional point with the tapered surface 16) is located nearer to the central portion of the resilient shoe 12 in the traveling direction than the vertical projected area of the corresponding projection 11a. In addition, the resilient shoe 12 has a predetermined cross-section, particularly, the tapered surface 16 has a predetermined inclination such that the end portion A of the ground contact surface 15 is positioned nearer to the contact road surface 50 than the upper surface of elastic shoe 12 in the vicinity of the projection 11a of the respective ends in the traveling direction, when the crawler shoe in question is at a position of a final link plunge angle.

In the embodiment, although the entire bodies of the reinforced materials 18a and 18b are disposed in the elastic shoe 12, the upper surfaces thereof may be exposed on a surface corresponding to the ground contact surface 15. Also, although the ground contact surface 15 of the elastic shoe 12 has a flat surface as shown in the drawing, it may be formed as a convex surface.

Since the other portions of the crawler shoe are the same as those shown in Fig. 2, the detailed explanations thereof will be omitted.

According to the present invention, as the crawler shoe 10 constituted as mentioned above, the rubber thickness of the resilient shoe 12 at the position between the adjacent two projections 11a and 11b can be reduced as comparing with that in the prior art and, therefore, the difference in thickness with respect to the rubber thickness of the resilient shoe 12 at the upper surface portions of the respective projections 11a and 11b will be minimized, since the reinforced members 18a and 18b are disposed between the projections 11a of the metal shoe 11 at the respective ends in the traveling direction and the projection 11b at the central position in the traveling direction.

Therefore, the difference in the coefficient of elasticity of the rubber of the elastic shoe 12 in the thickness direction between at the upper surface portions of the respective projections 11a and 11b and at the positions between the respective projections 11a and 11b can considerably be reduced and, therefore, when the elastic shoe 12 comes into contact with the road 15, the stress concentration exerted on the rubber at the upper surface portions of the projections 11a and 11b can be dispersed and moderated.

Also, in the crawler belt 10 constituted as mentioned above, the portion of the elastic shoe 12 corresponding to the projected areas of the projections 11a toward the ground contact side, at which the tapered surface 16 ir provided, does not contact the road surface 15, at the time of final plunge angle ϑ . But, the end portion A on the the ground contact surface 15 located nearer to the central position in the traveling direction first comes into contact with the road surface 15. Therefore, the shearing force around such portions become smaller and, therefore, these portions will be subjected mainly to a compression force. In particular, the shearing rigidity of the resilient shoe 12 disposed between the adjacent projections 11a and 11b becomes higher due to the reinforced members 18a and 18b disposed at a predetermined depth and, therefore, almost no strain due to the shearing force will generate on the elastic shoe 12 at the projected area of the ground contact side of the projections 11a.

Therefore, during traveling on a gravel road, even if pebbles or the link on the road snapped by the side face 14 of the resilient shoes 12, the rubber therearound will not be damaged.

In the above-mentioned embodiment, although the tapered surfaces 16 are formed on the surface of the resilient shoe 12 at the upper portions of the projections 11a of the metal shoe 11 at the respective ends in the traveling direction, the shape in cross-section of the elastic shoe in the vicinity of this portion can optionally be selected other than that as mentioned above.

It should be understood by those skilled in the art that the foregoing description relates to only a preferred embodiment of the disclosed invention, and that various changes and modifications may be made to the invention without departing from the spirit and scope thereof.

## Claims

1. A crawler shoe used in an endless tracked vehicle, said crawler shoe (10) having a ground contact side and comprising: a metal shoe (11) made of, such as iron or the like, and providing integrally with at least two projections (11a,11b) projecting toward said ground contact side (15), and a elastic shoe (12) made of, such as a rubber or the like, integrally molded and sealed with said metal shoe (11) at said ground contact side, characterized in that a reinforced member (18a,18b) is integrally disposed in said elastic shoe (12) at a position between adjacent two of said projections.

2. A crawler shoe as set forth in claim 1, wherein said metal shoe (11) has at least three projections (11a,11b) arranged at respective ends and an intermediate position in a traveling direction of the crawler shoe.

3. A crawler shoe as set forth in claim 2, wherein a thickness of said resilient shoe (12) where the reinforced members are disposed is 0.5-2.0, preferably 0.8-1.3 times with respect to a thickness of said elastic shoe at an area where said projection, except for the projections at said respective ends, is located.

4. A crawler shoe as set forth in claim 1, wherein said reinforced member is disposed in said elastic shoe (12) at a position of depth that, assuming that said reinforced member and said projections have their projected areas in a circumferential direction of the crawler shoe, at least a part of said projected area of the reinforced member is superimposed with said projected area of the projections.

5. A crawler shoe as set forth in claim 1, wherein said elastic shoe has a vertical cross-section in a traveling direction thereof, said cross-section is defined by a ground contact surface (15), respective end surfaces substantially perpendicular to said ground contact surface and transitional portions between said ground contact surface and said respective end surfaces, a first point defined by both said ground contact surface and said transitional portion is located near to the ground than a second point defined by said transitional surface and said end surface, when said crawler shoe is at a position of a final link plunge angle.

## Patentansprüche

1. Raupenschuh zur Verwendung in einem Raupenfahrzeug, wobei der Raupenschuh (10) eine Bodenkontaktseite aufweist und umfaßt: einen Metallschuh (11) aus Eisen oder dergleichen, der integriert versehen ist mit mindestens zwei Vorsprüngen (11a, 11b), die in Richtung Bodenkontaktseite (15) vorstehen, und einen elastischen Schuh (12) aus einem Gummi oder dergleichen, der integriert geformt und mit dem Metallschuh (11) an der Bodenkontaktseite versiegelt ist, dadurch gekennzeichnet, daß ein Verstärkungselement (18a, 18b) in dem elastischen Schuh (12) an einer Stelle zwischen zwei nebeneinanderliegenden Vorsprüngen integriert angeordnet ist.

2. Raupenschuh nach Anspruch 1, wobei der Metallschuh (11) mindestens drei Vorsprünge (11a, 11b) aufweist, die an den jeweiligen Enden und an einer Zwischenstelle in Fahrtrichtung des Raupenschuhs angeordnet sind.

3. Raupenschuh nach Anspruch 2, wobei eine Stärke des elastischen Schuhs (12) dort, wo die Verstärkungselemente angeordnet sind, 0,5 - 2,0, vorzugsweise 0,8 - 1,3 mal so groß ist wie eine Stärke des elastischen Schuhs in einem Bereich, wo der Vorsprung angeordnet ist, ausgenommen die Vorsprünge an den jeweiligen Enden.

4. Raupenschuh nach Anspruch 1, wobei das Verstärkungselement in dem elastischen Schuh (12) an einer Stelle hinsichtlich der Tiefe eingelagert ist, so daß wenigstens ein Teil des vorstehenden Bereiches des Verstärkungselements den vorstehenden Bereich der Vorsprünge überdeckt, unter der Annahme, daß das Verstärkungselement und die Vorsprünge ihre vorstehenden Bereiche in einer Umfangrichtung des Raupenschuhs haben.

5. Raupenschuh nach Anspruch 1, wobei der elastische Schuh einen vertikalen Querschnitt in seiner Fahrtrichtung hat, der definiert wird durch eine Bodenkontaktfläche (15), jeweilige zur Bodenkontaktfläche im wesentlichen senkrechte Endflächen und Übergangsabschnitte zwischen der Bodenkontaktfläche und den jeweiligen Endflächen, wobei ein erster Punkt, definiert durch die Bodenkontaktfläche und den Übergangsabschnitt, näher zum Boden angeordnet ist als ein zweiter Punkt, definiert durch die Übergangsfläche und die Endfläche, wenn der Raupenschuh sich in einer Stellung eines Endgliedeintauchwinkels befindet.

## Revendications

1. Patin de chenille employé dans un véhicule à chenille sans fin, ledit patin de chenille (10) ayant un côté en contact avec le sol et comportant: un patin métallique (11) en, par exemple fer ou analogue et muni d'au moins deux saillies solidaires (11a, 11b) s'avançant vers ledit côté (15) de contact avec le sol, et un patin élastique (12) en, par exemple caoutchouc ou analogue, moulé en une pièce et scellé avec ledit patin métallique (11) audit côté de contact avec le sol, caractérisé en ce qu'un élément renforcé (18a, 18b) est disposé intégralement dans ledit patin élastique (12) à un endroit situé entre deux saillies adjacentes desdites saillies.

2. Patin de chenille selon la revendication 1, dans lequel ledit patin métallique (11) comporte au moins trois saillies (11a, 11b) disposées aux extrémités respectives et à une position intermédiaire dans le sens de déplacement du patin de chenille.

3. Patin de chenille selon la revendication 2, dans lequel l'épaisseur dudit patin élastique (12) où sont disposés les éléments renforcés est 0,5-2,0, de préférence 0,8-1,3, fois l'épaisseur dudit patin élastique à une zone où est située ladite saillie, à l'exception des saillies situées auxdites extrémités respectives.

4. Patin de chenille selon la revendication 1, dans lequel ledit élément renforcé est disposé dans ledit patin élastique (12) à un endroit de la profondeur tel que, en supposant que ledit élément renforcé et lesdites saillies ont leurs zones projetées dans la direction circonférentielle du patin de chenille, au moins une partie de ladite zone projetée de l'élément renforcée est superposée à ladite zone projetée des saillies.

5. Patin de chenille selon la revendication 1, dans lequel ledit patin élastique présente une section transversale verticale dans son sens de déplacement, ladite section transversale est définie par une surface (15) de contact avec le sol, des surfaces d'extrémité respectives sensiblement perpendiculaires à ladite surface de contact avec le sol et des parties de transition entre ladite surface de contact avec le sol et lesdites surfaces d'extrémité respectives, un premier point défini par ladite surface de contact avec le sol ainsi que par ladite partie de transition est situé plus près du sol qu'un second point défini par ladite surface de transition et ladite surface d'extrémité, lorsque ledit patin de la chenille se trouve à une position d'un angle de plongée finale d'un maillon.
